# EUROPEAN PATENT APPLICATION

(11) **EP 4 579 021 A1**
(43) Date of publication of application: **02.07.2025**
(21) Application number: 23858750.5
(22) Date of filing: 26.05.2023
(51) Int. Cl.: D06F 25/00, D06F 58/24, D06F 58/32, D06F 58/46, D06F 58/50

(54) **CONTROL METHOD FOR CLOTHES TREATING APPARATUS, CLOTHES TREATING APPARATUS, AND READABLE STORAGE MEDIUM**

(30) Priority: 31.08.2022 CN 202211057592; 31.08.2022 WO PCT/CN2022/116242; 17.01.2023 WO PCT/CN2023/072661
(71) Applicant: Nanjing Roborock Innovation Technology Co., Ltd., Nanjing, Jiangsu 210039 (CN)
(72) Inventor: XUE, Lei, Shenzhen, Guangdong 518000 (CN); WANG, Wei, Shenzhen, Guangdong 518000 (CN); LIN, Chenghu, Shenzhen, Guangdong 518000 (CN); FANG, Junjun, Shenzhen, Guangdong 518000 (CN)
(74) Representative: Manitz Finsterwald Patent- und Rechtsanwaltspartnerschaft mbB
(86) International application number: PCT/CN2023/096634
(87) International publication number: WO 2024/045711

(57) **Abstract**

Provided in the present application is a control method for a clothes treating apparatus, a clothes treating apparatus, and a readable storage medium. The clothes treating apparatus comprises a clothes holding device, a moisture absorption/removal channel and a drying device, wherein the moisture absorption/removal channel communicates with the clothes holding device; the drying device is arranged in the moisture absorption/removal channel; and the drying device comprises at least one of a moisture absorption/removal turntable, a heating module and a heat exchange module. The control method comprises: acquiring a temperature near an air opening of the clothes holding device and/or the moisture absorption/removal channel when the drying device is in an operating state, the air opening comprising an air inlet and/or an air outlet; and adjusting the operating state of the drying device and/or outputting an anomaly prompt message when the temperature near the air opening of the clothes holding device and/or the moisture absorption/removal channel reaches a preset temperature threshold. In the present application, anomaly detection can be achieved to promptly and accurately control any abnormal drying condition, and the operating state of the drying device can be adjusted to improve the accurate control of a drying process, eventually improving the drying effect.

## Description

The present application claims priority to Chinese Patent Application No. 202211057592.1 filed on August 31, 2022, PCT International Patent Application No. PCT/CN2022/116242 filed on August 31, 2022, and PCT International Patent Application No. PCT/CN2023/072661 filed on January 17, 2023, the disclosures of all of which are herein incorporated by reference.

### TECHNICAL FIELD

The present disclosure relates to the field of household appliances, and particularly, to a method for controlling a laundry treating device, a laundry treating device and a readable storage medium.

### BACKGROUND

Laundry treating devices are capable of performing a variety of laundry treatments, such as washing, rinsing, ironing and drying, and thus have entered thousands of households at present and become commonly used household appliances.

In the related art, abnormal conditions or inaccurate control on a drying apparatus occur(s) easily for the laundry treating device when it is drying laundry, which negatively affects a drying process and reduces a drying effect.

### SUMMARY

In view of this, the present application provides a method for controlling a laundry treating device, a laundry treating device and a readable storage medium, which can achieve abnormal detection, punctually and accurately discover drying abnormal and adjust the working state of the drying apparatus to achieve accurate control on a drying process, and ultimately improve the drying effect.

In a first aspect, embodiments of the present application provide a method for controlling a laundry treating device, wherein the laundry treating device includes a laundry accommodating apparatus, a moisture absorption-desorption passage, and a drying apparatus, wherein the moisture absorption-desorption passage is communicated with the laundry accommodating apparatus, and the drying apparatus is arranged in the moisture absorption-desorption passage and includes at least one of a moisture absorption-desorption rotary wheel, a heating module and a heat exchange module; the method includes:
when the drying apparatus is in a running state, acquiring a temperature near an air opening of the laundry accommodating apparatus and/or the moisture absorption-desorption passage, wherein the air opening includes an air inlet and/or an air outlet; and
when the temperature near the air opening of the laundry accommodating apparatus and/or the moisture absorption-desorption passage reaches a preset temperature threshold, adjusting a working state of the drying apparatus and/or outputting abnormal prompt information.

The above method according to the embodiments of the present application may further have the following additional technical features.

In the above technical solution, optionally, the moisture absorption-desorption passage includes a moisture-absorbing passage and a regenerating passage; the drying apparatus includes at least two of the moisture absorption-desorption rotary wheel, the heating module and the heat exchange module; the moisture absorption-desorption rotary wheel is partially located on the moisture-absorbing passage and partially located on the regenerating passage; the heating module and/or the heat exchange module is located on the regenerating passage; the moisture absorption-desorption rotary wheel is configured to absorb moisture in circulating airflow in the moisture-absorbing passage; the heating module is configured to heat the moisture absorption-desorption rotary wheel in the regenerating passage to desorb moisture from the moisture absorption-desorption rotary wheel, and the heat exchange module is configured to exchange heat with dehumidification airflow formed through moisture desorption; and when the temperature near the air opening of the moisture absorption-desorption passage reaches the preset temperature threshold, adjusting the working state of the drying apparatus and/or outputting the abnormal prompt information specifically includes:
when a temperature near an air opening of the heat exchange module reaches the preset temperature threshold, adjusting the working state of the drying apparatus and/or outputting the abnormal prompt information.

In any of the above technical solutions, optionally, the heat exchange module includes a condensing module; and when the temperature near the air opening of the heat exchange module reaches the preset temperature threshold, adjusting the working state of the drying apparatus and/or outputting the abnormal prompt information specifically includes:
when a condensing air inlet temperature near a condensing air inlet of the condensing module reaches the preset temperature threshold, adjusting the working state of the drying apparatus and/or outputting the abnormal prompt information.

In any of the above technical solutions, optionally, the preset temperature threshold includes a first temperature threshold; and when the condensing air inlet temperature near the condensing air inlet of the condensing module reaches the preset temperature threshold, adjusting the working state of the drying apparatus specifically includes:
when the condensing air inlet temperature reaches the first temperature threshold, reducing heating power of the heating module within a first duration.

In any of the above technical solutions, optionally, when the condensing air inlet temperature reaches the first temperature threshold, turning off the heating module and keeping the condensing module and/or a regenerating fan of the drying apparatus running,
wherein the regenerating fan of the drying apparatus is arranged in the regenerating passage and configured to form regenerating airflow of the regenerating passage.

In any of the above technical solutions, optionally, the first temperature threshold is configured to determine presence or absence of a water film in a filter structure of the laundry treating device, and the heating module is turned off while the condensing module and/or the regenerating fan of the drying apparatus is kept running for the first duration to break and remove the water film.

In any of the above technical solutions, optionally, the preset temperature threshold includes a second temperature threshold, and the second temperature threshold is greater than the first temperature threshold; and when the condensing air inlet temperature near the condensing air inlet of the condensing module reaches the preset temperature threshold, adjusting the working state of the drying apparatus specifically includes:
when the condensing air inlet temperature reaches the second temperature threshold, controlling the laundry treating device to enter a forced cooling mode, where the forced cooling mode includes at least one of turning off the heating module and controlling the condensing module and the regenerating fan of the drying apparatus to be activated for a second duration.

In any of the above technical solutions, optionally, when the condensing air inlet temperature near the condensing air inlet of the condensing module reaches the preset temperature threshold, outputting the abnormal prompt information specifically includes:
when the condensing air inlet temperature reaches the second temperature threshold, outputting the abnormal prompt information that the rotary wheel is abnormal.

In any of the above technical solutions, optionally, the preset temperature threshold includes a first preset change amplitude threshold; and when the condensing air inlet temperature near the condensing air inlet of the condensing module reaches the preset temperature threshold, adjusting the working state of the drying apparatus specifically includes:
when a change amplitude of the condensing air inlet temperature within a first preset time period is less than or equal to the first preset change amplitude threshold, turning off the heating module.

In any of the above technical solutions, optionally, when the condensing air inlet temperature near the condensing air inlet of the condensing module reaches the preset temperature threshold, outputting the abnormal prompt information specifically includes:
when the change amplitude of the condensing air inlet temperature within the first preset time period is less than or equal to the first preset change amplitude threshold, outputting the abnormal prompt information that the heating apparatus is abnormal.

In any of the above technical solutions, optionally, the laundry treating device further includes an air inlet duct and an air outlet duct; the laundry accommodating apparatus is provided with an air inlet communicated with the moisture absorption-desorption passage through the air inlet duct, and an air outlet communicated with the moisture absorption-desorption passage through the air outlet duct;
the preset temperature threshold includes a third temperature threshold and a fourth temperature threshold, and the third temperature threshold is less than the fourth temperature threshold; and
when the temperature near the air opening of the laundry accommodating apparatus reaches the preset temperature threshold, adjusting the working state of the drying apparatus specifically includes:
when an air inlet temperature near the air inlet of the laundry accommodating apparatus reaches the third temperature threshold, increasing heating power of the heating module of the drying apparatus to first target power; and when the air inlet temperature near the air inlet of the laundry accommodating apparatus reaches the fourth temperature threshold, reducing the heating power of the heating module of the drying apparatus to second target power, thereby enabling an air outlet temperature near the air outlet of the laundry accommodating apparatus to be within a target temperature range.

In any of the above technical solutions, optionally, adjusting the working state of the drying apparatus includes turning off the heating module of the drying apparatus, that is, acquiring the temperature near the air opening of the laundry accommodating apparatus and/or the condensing module, and when the temperature near the air opening reaches the preset temperature threshold, turning off the heating module of the drying apparatus.

In any of the above technical solutions, optionally, the preset temperature threshold includes a fifth temperature threshold, a sixth temperature threshold, a seventh temperature threshold and a second preset change amplitude threshold, wherein the seventh temperature threshold is greater than the first temperature threshold and less than the second temperature threshold; and
when the temperature near the air opening reaches the preset temperature threshold, turning off the heating module of the drying apparatus specifically includes:
when a condensing air outlet temperature near a condensing air outlet of the condensing module reaches the sixth temperature threshold, turning off the heating module of the drying apparatus; or
when a condensing air inlet temperature of the condensing module reaches the seventh temperature threshold, turning off the heating module of the drying apparatus; or
when a change amplitude of an air outlet temperature of the laundry accommodating apparatus within a second preset time period is greater than or equal to the second preset change amplitude threshold, turning off the heating module of the heating apparatus.

In any of the above technical solutions, optionally, the method further includes:
after turning off the heating module, keeping the moisture absorption-desorption rotary wheel, the condensing module, a circulating fan of the drying apparatus and a regenerating fan of the drying apparatus running,
wherein the circulating fan of the drying apparatus is arranged in the moisture-absorbing passage and configured to form circulating airflow of the laundry accommodating apparatus and the moisture-absorbing passage.

In any of the above technical solutions, optionally, the method further includes:
when an air inlet temperature of the laundry accommodating apparatus reaches an eighth temperature threshold, turning off the moisture absorption-desorption rotary wheel, the condensing module, the circulating fan of the drying apparatus and the regenerating fan of the drying apparatus.

In any of the above technical solutions, optionally, before adjusting the working state of the drying apparatus, the method further includes:
when an air outlet temperature of the laundry accommodating apparatus reaches a fifth temperature threshold, performing, by controlling the laundry accommodating apparatus to rotate, a first weighing process to obtain a first weight value; and
generating a drying time according to the first weight value.

In any of the above technical solutions, optionally, the method further includes:
when the drying apparatus is in the running state, acquiring a rotating speed of a fan of the drying apparatus; and
when the rotating speed is less than or equal to a preset rotating speed threshold, controlling the drying apparatus to stop running, wherein the fan of the drying apparatus includes at least one of a circulating fan and/or a regenerating fan.

In any of the above technical solutions, optionally, the method further includes:
when the rotating speed is less than or equal to the preset rotating speed threshold, outputting the abnormal prompt information that the fan is abnormal.

In any of the above technical solutions, optionally, before the drying apparatus runs, the method further includes:
determining whether to perform a second weighing process according to a preset drying mode, and if the second weighing process is performed, acquiring a second weight value by controlling the laundry accommodating apparatus to rotate; and
when the second weight value is greater than or equal to a preset weight threshold, performing dehydration by controlling the laundry accommodating apparatus to rotate.

In any of the above technical solutions, optionally, the laundry treating device further includes a temperature measuring sensor configured to acquire a temperature of the laundry accommodating apparatus and/or a temperature near an air opening of the moisture absorption-desorption passage.

In any of the above technical solutions, optionally, the method further includes:
acquiring correspondence data between a resistance value and a detected temperature value of the temperature measuring sensor; and
comparing the correspondence data with standard resistance-temperature correspondence data of the temperature measuring sensor, and if the correspondence data does not match the standard resistance-temperature correspondence data, outputting the prompt information that the temperature measuring sensor is abnormal.

In any of the above technical solutions, optionally, the temperature measuring sensor includes a first sensor, a second sensor, a third sensor, and a fourth sensor,
wherein the first sensor is arranged near a condensing air inlet of a condensing module of the drying apparatus, and is configured to acquire a condensing air inlet temperature of the condensing module; the second sensor is arranged near a condensing air outlet of the condensing module of the drying apparatus, and is configured to acquire a condensing air outlet temperature of the condensing module; the third sensor is arranged at any of a position near a tub bottom of an outer tub of the laundry treating device and a position near an airflow outlet of the laundry accommodating apparatus, and is configured to acquire an air outlet temperature of the laundry accommodating apparatus; and the fourth sensor is arranged near an air inlet duct of the laundry treating device, and is configured to acquire an air inlet temperature of the laundry accommodating apparatus.

In a second aspect, embodiments of the present disclosure provide a laundry treating device. The laundry treating device includes a laundry accommodating apparatus, a moisture absorption-desorption passage, a drying apparatus, a memory and a processor, wherein the moisture absorption-desorption passage is communicated with the laundry accommodating apparatus, the drying apparatus is arranged in the moisture absorption-desorption passage and includes at least one of a moisture absorption-desorption rotary wheel, a heating module and a heat exchange module; the memory stores a program or an instruction; and the processor is connected to the memory and implements steps of the method as described in the first aspect when executing the program or instruction.

In a third aspect, embodiments of the present disclosure provide an electronic device. The electronic device includes a processor and a memory, wherein the memory stores a program or an instruction that may be run on the processor, and the program or instruction, when executed by a processor, implement steps of the method as described in the first aspect.

In a fourth aspect, embodiments of the present disclosure provide a readable storage medium storing a program or an instruction, wherein the programs or the instruction, when executed by a processor, implements steps of the method as described in the first aspect.

In a fifth aspect, embodiments of the present disclosure provide a chip. The chip includes a processor and a communication interface coupled to the processor, wherein the processor is configured to run programs or instructions to implement the method as described in the first aspect.

In the embodiments of the present disclosure, when drying the laundry, the laundry treating device can achieve abnormal detection according to the temperature near the air opening of at least one of the laundry accommodating apparatus and the moisture absorption-desorption passage, thus punctually and accurately discover drying abnormal and adjust the working state of the drying apparatus to achieve accurate control on a drying process, and ultimately improve the drying effect.

The above description merely summarizes the technical solutions of the present application. For understanding the technical means of the present application more clearly, the present application may be implemented according to the content in the Description, and in order to make the above and other objects, features and advantages of the present application more apparent and understandable, specific embodiments of the present application are illustrated below.

### BRIEF DESCRIPTION OF DRAWINGS

The accompanying drawings here are provided for further understanding of the present application and constitute a part of present application, and the exemplary embodiments of the present application and the description thereof are used to explain the present application, and do not constitute an improper limitation to the present application. In the accompanying drawings:
FIG. 1 shows a first schematic structural diagram of a laundry treating device according to an embodiment of the present application;
FIG. 2 shows a second schematic structural diagram of the laundry treating device according to the embodiment of the present application;
FIG. 3 shows a third schematic structural diagram of the laundry treating device according to the embodiment of the present application;
FIG. 4 shows a fourth schematic structural diagram of the laundry treating device according to the embodiment of the present application; and
FIG. 5 shows a schematic flowchart of a method for controlling a laundry treating device according to an embodiment of the present application.

Correspondences of component names and reference signs are as follows:
laundry treating device 100; laundry accommodating apparatus 101; door body 102; housing 103; air outlet duct 104; drying apparatus 105; connector 106; first sensor 107; target set area 108 of third sensor; fourth sensor 109; circulating fan 1501; moisture absorption-desorption rotary wheel 1502; moisture absorption-desorption driving part 1503; regenerating fan 1504; heating module 1505; condensing module 1506; passage air outlet 1507; passage air inlet 1508; flexible duct 1509; moisture-absorbing passage 1510; regenerating passage 1511; lower shell 1600; first mounting part 1601; second mounting part 1602; third mounting part 1603; fourth mounting part 1604; upper shell 1701 of circulating fan; upper shell 1702 of moisture absorption-desorption rotary wheel; and upper shell 1703 of condensing module 1703.

### DETAILED DESCRIPTION

The technical solutions in the embodiments of the present disclosure will be clearly described below with reference to the accompanying drawings in the embodiments of the present disclosure. Obviously, the embodiments described are some but not all embodiments of the present disclosure. Based on the embodiments of the present disclosure, all other embodiments derived by a person of ordinary skill in the art shall fall within the protection scope of the present disclosure.

The terms "first", "second" and the like in the description and claims of the present application are used to distinguish similar objects, but not used to describe a specific order or precedence order. It should be understood that data used in this way is interchangeable where appropriate, so that the embodiments of the present application can be practiced in a sequence other than those illustrated or described herein. In addition, the objects distinguished by the terms "first", "second", etc. usually belong to one category, and terms "first", "second" etc. are not intended to limit the number of objects, for example, the number of first objects can be one or more. In addition, the expression "and/or" in the description and claims represents at least one of objects connected thereby, and the character here "/" generally indicates that the associated objects are in an "or" relationship.

A method for controlling a laundry treating device, a laundry treating device and a readable storage medium provided by the embodiments of the present application are described in detail below in conjunction with the accompanying drawings through specific embodiments and their application scenarios.

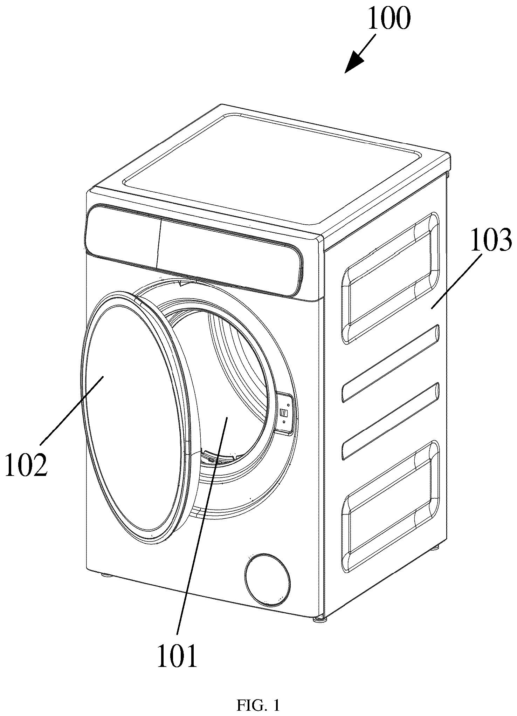

The present application provides a laundry treating device for washing, rinsing, ironing, drying, etc. laundry. The laundry treating device includes but is not limited to a washing machine, a drying machine, a washer-dryer and other laundry treating devices. Structural diagrams of the laundry treating device provided by the embodiments of the present application are as shown in FIG. 1 to FIG. 4.

It should be noted that although the laundry treating device of the embodiment of the present application is described by taking a side-opening door type laundry treating device as an example, it should be understood that the laundry treating device of the embodiment of the present application may be applicable to any type of laundry treating device, including but not limited to: a side-opening door type drum washing machine, a top-opening door type drum washing machine, a pulsator washing machine, an agitator washing machine, a mini washing machine, etc.

A laundry accommodating apparatus 101 may be arranged as a drum. The drum may include an inner tub and an outer tub, the inner tub being configured to hold laundry to be treated and rotating under the action of a driving motor for the inner tub, while the outer tub being fixed relative to a body in a hanging manner. A door body 102 is arranged at a position, corresponding to the laundry accommodating apparatus 101, on a housing 103 of the laundry treating device 100. The door body 102 is pivotally connected to the housing 103. The opening and closing of the door body 102 may be controlled manually by a user or by means of an electronic controller.

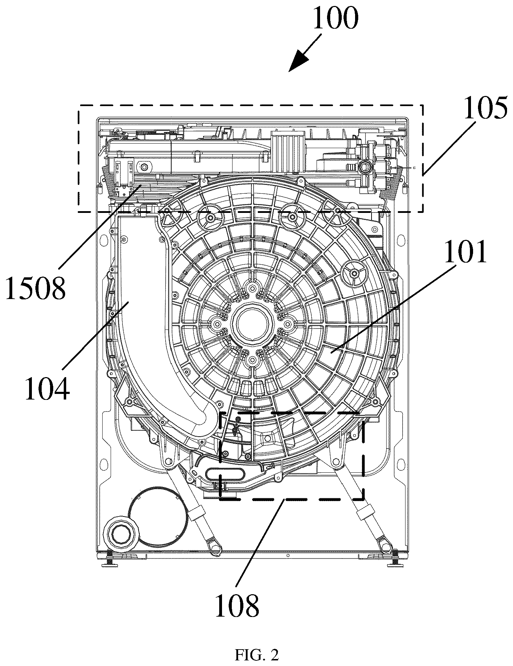

As shown in FIG. 1 and FIG. 2, the laundry treating device 100 includes a drying apparatus 105 configured to dry the laundry inside the laundry accommodating apparatus 101. The drying apparatus 105 is located above the laundry accommodating apparatus 101. Relative positions of the laundry accommodating apparatus 101 and the drying apparatus 105 are not fixed, and the laundry accommodating apparatus 101 and the drying apparatus 105 may be opposite to each other vertically, or horizontally.

In the embodiments of the present application, the drying apparatus 105 includes a moisture absorption-desorption passage, a regenerating fan 1501, a moisture absorption-desorption rotary wheel 1502, a moisture absorption-desorption driving part 1503 and a regenerating fan 1504.

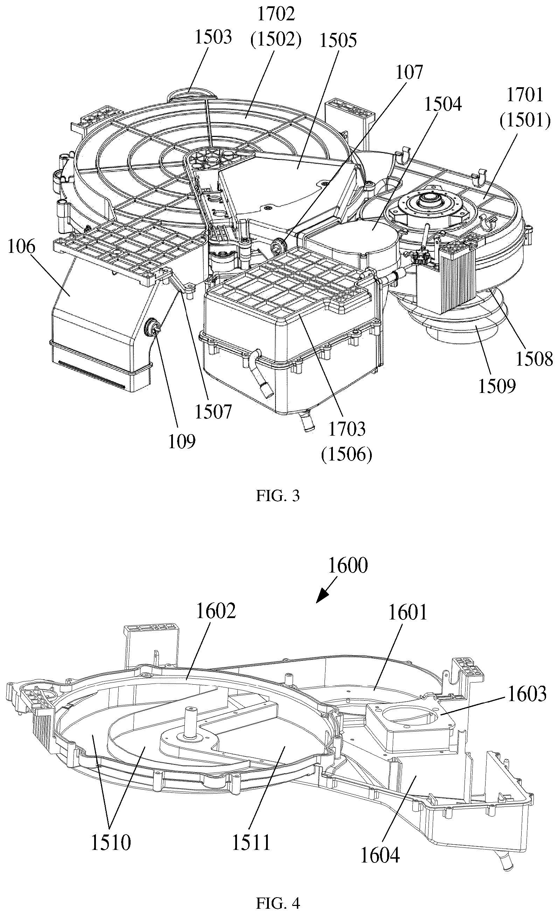

As shown in FIG. 2 and FIG. 3, a passage air inlet 1508 (i.e., a first air inlet) of the moisture absorption-desorption passage is communicated with an air outlet duct 104 of the laundry accommodating apparatus 101 through a flexible duct 1509, and a passage air outlet 1507 (i.e., first air outlet) of the moisture absorption-desorption passage is communicated with an air inlet duct (not shown in the figure) of the laundry accommodating apparatus 101 through a connector 106.

With continued reference to FIG. 2 and FIG. 3, the laundry accommodating apparatus 101 is provided with an airflow inlet, i.e., an air inlet of the laundry accommodating apparatus 101, and an airflow outlet, i.e., an air outlet of the laundry accommodating apparatus 101. The airflow inlet of the laundry accommodating apparatus 101 is communicated with the passage air outlet 1507 of the drying apparatus 105 through the air inlet duct, and the airflow outlet of the laundry accommodating apparatus 101 is communicated with the passage air inlet 1508 through the air outlet duct 104.

As shown in FIG. 4, the moisture absorption-desorption passage includes a moisture-absorbing passage 1510 (i.e., moisture-absorbing space) and a regenerating passage 1511 (i.e., a dehumidifying space), a circulating fan 1501 is located in the moisture-absorbing passage and configured to generate circulating airflow in the laundry accommodating apparatus 101 and the moisture-absorbing passage, and the regenerating fan 1504 is located in the regenerating passage and configured to generate dehumidification airflow in the regenerating passage.

A part of the moisture absorption-desorption rotary wheel 1502 is located on the moisture-absorbing passage and the other part of the moisture absorption-desorption rotary wheel 1502 is located on the regenerating passage, so that the circulating airflow in the moisture-absorbing passage and the dehumidification airflow in the regenerating passage both flow through the moisture absorption-desorption rotary wheel 1502.

According to some embodiments, a moisture absorbent for absorbing moisture is arranged on the moisture absorption-desorption rotary wheel 1502. The moisture absorbent may be, for example, materials having moisture-absorbing properties, such as zeolite, modified/synthesized zeolite, a molecular sieve (including but not limited to a zeolite molecular sieve, an A/X/Y-type molecular sieve, a ZSM molecular sieve, a Beta molecular sieve, etc.), a polymer moisture absorbent, an alkali metal aluminosilicate (13X molecular sieve), lithium chloride, silica gel, modified silica gel and activated alumina. The polymer moisture absorbent, also known as a polymer adsorbent, has a lower regenerating temperature than traditional silica gel, activated carbon and molecular sieve adsorbents.

In some embodiments, the moisture absorption-desorption rotary wheel 1502 may be made of zeolite, a molecular sieve, a metal organic framework (MOF), covalent organic frameworks (COFs), nano-carbon, silica and other porous materials.

In some embodiments, the moisture absorption-desorption rotary wheel 1502 may be a honeycomb or corrugated rotary wheel carrying the moisture absorbent and is capable of adsorbing and desorbing absorbed water vapor to achieve repeated desorption and regeneration. In some embodiments, the moisture absorption-desorption rotary wheel 1502 includes inorganic/organic fiber carriers (such as ceramic, glass fiber, MOFs, COFs, and iolite), the fiber carriers are coated with the moisture absorbent such as molecular sieve and the molecular sieve is evenly distributed among the fiber carriers and on the surfaces of the fiber carriers to adsorb moisture from airflow. The molecular sieve may include an A-type molecular sieve, an X/Y-type molecular sieve, a ZSM molecular sieve, a Beta molecular sieve and other single-crystal molecular sieves or mixed-crystal molecular sieve. The moisture absorption-desorption driving part 1503 is configured to drive the moisture absorption-desorption rotary wheel 1502 to rotate relative to the moisture-absorbing passage and the regenerating passage. The moisture absorption-desorption driving part 1503 may be a driving motor, and the moisture absorption-desorption rotary wheel 1502 absorbs moisture from the circulating airflow and discharges the same through the dehumidification airflow during rotating. That is, the circulating airflow and the dehumidification airflow flow through the moisture absorption-desorption rotary wheel 1502 simultaneously. As shown in FIG. 4, a region through which the circulating airflow flows is the moisture-absorbing passage 1510, while a region through which the dehumidification airflow flows is the regenerating passage 1511. The moisture absorption-desorption rotary wheel 1502 executes a moisture-absorbing function when rotating to the moisture-absorbing passage 1510, and executes a dehumidifying function when rotating to the regenerating passage 1511.

According to some embodiments, as shown in FIG. 3, the drying apparatus 105 may further include a heating module 1505 and a heat exchange module which are located on the regenerating passage 1511. The heating module 1505 covers at least a part of the regenerating passage 1511 of the moisture absorption-desorption rotary wheel 1502 and is configured to heat the moisture absorption-desorption rotary wheel 1502 in the regenerating passage 1511 so as to desorb the moisture absorbed by the moisture absorption-desorption rotary wheel 1502, and the heat exchange module is configured to exchange heat with dehumidification airflow formed by moisture desorption.

It should be noted that, in some embodiments, the drying apparatus 105 may also be provided with no heat exchange module, and moist air is directly discharged outside the drying apparatus or the laundry accommodating apparatus after being heated; and in some embodiments, the drying apparatus 105 may also be provided with no heating module 1505, and the moisture absorption-desorption rotary wheel 1502 is provided with a low-temperature desorption material, such as a polymer material; and based on the moisture-absorbing material having low-temperature desorption performance, moisture desorption of the moisture absorption-desorption rotary wheel 1502 can be achieved by means of cooling means such as discharge of air by a fan, without heating at a high temperature.

In an embodiment, the heat exchange module includes a condensing module 1506 configured to condense the dehumidification airflow flowing out of the regenerating passage 1511 so as to dry the dehumidification airflow. Specifically, the condensing module 1506 includes a condensing air inlet (i.e., a second air inlet). In some embodiments, a housing of the condensing module 1506 is provided with the condensing air inlet, and the airflow heated by the heating module 1505 flows through the regenerating passage 1511, and then enters the condensing module 1506 through the condensing air inlet. The condensing module 1506 further includes a condensing air outlet (i.e., a second air outlet). In some embodiments, the housing of the condensing module 1506 is further provided with the condensing air outlet connected to an air inlet of the regenerating fan 1504, so that the regenerating passage 1511 forms a closed loop.

According to some embodiments, the drying apparatus 105 further includes an upper shell and a lower shell. The upper shell and the lower shell cover and fix various components of the drying apparatus 105, so that the drying apparatus 105 forms an integral module.

According to some embodiments, the upper shell and the lower shell of the drying apparatus 105 may be discrete shells which correspond to respective components of the drying apparatus 105 respectively, or an integrated shell which corresponds to a plurality of components of the drying apparatus 105. As shown in FIG. 4, a first mounting part 1601 for mounting of the circulating fan 1501, a second mounting part 1602 for mounting of the moisture absorption-desorption rotary wheel 1502, a third mounting part 1603 for mounting of the regenerating fan 1504, and a fourth mounting part 1604 for mounting of the condensing module 1506 are arranged on the lower shell 1600. The upper shell of the drying apparatus 105 is a discrete shell, including an upper shell 1701 for mounting of the circulating fan 1501, an upper shell 1702 for mounting of the moisture absorption-desorption rotary wheel 1502, an upper shell 1703 for mounting of the condensing module 1506 and the like.

According to some embodiments, as shown in FIG. 2 and FIG. 3, the passage air inlet 1508 of the moisture absorption-desorption passage may be communicated with the air outlet duct 104 of the laundry accommodating apparatus 101 through the flexible duct (such as a corrugated hose) 1509. According to some embodiments, a filter structure (such as a filter screen) for filtering debris and clothes waddings may be arranged in the air outlet duct 104. In addition, the connector 106 may also be communicated with the air inlet duct of the laundry accommodating apparatus 101 through a flexible duct. Thus, no direct rigid connection may exist between the drying apparatus 105 and the laundry accommodating apparatus 101. Therefore, the vibration of the laundry accommodating apparatus 101 during operation can be avoided from transferring to the drying apparatus 105 (especially to the moisture absorption-desorption rotary wheel 1502), thereby improving the stability and reliability of the drying apparatus 105.

Under the action of the circulating fan 1501, the circulating airflow may be formed between the moisture-absorbing passage and laundry accommodating apparatus 101. Specifically, under the action of the circulating fan 1501, the airflow in the laundry accommodating apparatus 101 enters the passage air inlet 1508 sequentially through the air outlet duct 104 and the flexible duct 1509 and then enters the air inlet of the circulating fan 1501. The airflow flows from the air outlet of the circulating fan 1501 to the lower side of the moisture absorption-desorption rotary wheel 1502, passes through the moisture absorption-desorption rotary wheel1502 to the upper side of the moisture absorption-desorption rotary wheel1502, flows in the upper space of the moisture absorption-desorption rotary wheel1502 (corresponding to the moisture-absorbing passage) and enters the laundry accommodating apparatus101 through the passage air outlet 1507 and the connector 106.

Under the action of the regenerating fan 1504 communicated with the heating module 1505 and the condensing module 1506, the dehumidification airflow may be formed in the regenerating passage. In an embodiment, under the action of the regenerating fan 1504, the dehumidification airflow enters the air inlet of the regenerating fan1504, passes through the regenerating fan 1504, and then enters the heating module 1505 through the air outlet of the regenerating fan 1504. The heating module 1505 is located above the regenerating passage 1511. The dehumidification airflow flows into the heating module 1505, and passes through the moisture absorption-desorption rotary wheel 1502 from top to bottom to desorb moisture from the moisture absorption-desorption rotary wheel 1502, and the desorbed moisture enters the regenerating passage 1511 along with the dehumidification airflow, and then flows into the condensing module 1506 through the condensing air inlet of the condensing module 1506. The condensing air outlet of the condensing module 1506 is communicated with the air inlet of the regenerating fan 1504, so that the regenerating passage forms a closed loop. The dehumidification airflow condensed by the condensing module 1506 flows into the air inlet of the regenerating fan 1504 again, so that the dehumidification airflow is capable of circularly flowing in the regenerating passage. The closed-loop regenerating passage can avoid the interaction between the dehumidification airflow and the external environment of the laundry treating device 100, thereby reducing the impact on the external environment (e.g., the impact on the humidity of outside air, etc.).

A laundry treating process of the above laundry treating device 100 is described below.

The laundry treating device 100 may perform one or more operations including a laundry washing operation and a drying operation. The laundry washing operation may include a washing stage, a rinsing stage and a dehydration stage. The drying operation may include a heating and drying stage and a cooling stage.

In an embodiment, compared with a laundry treating process of a laundry treating device in the related art, the embodiment of the present application can eliminate dehydration by heating in a dehydration stage and a pre-heating stage in a drying operation to avoid a negative impact on subsequent abnormal detection.

The heating and drying stage is configured to heat and dry the laundry in the laundry accommodating apparatus 101. Moist airflow in the laundry accommodating apparatus 101 flows continuously to the moisture absorption-desorption rotary wheel 1502, and the moisture absorption-desorption rotary wheel 1502 absorbs moisture from the moist airflow and delivers the dry airflow to the laundry accommodating apparatus 101 until heating and drying are completed. In the heating and drying stage, the laundry treating device is in a stage of stable running which is mainly reflected in the fact that a difference between a temperature near the airflow outlet and a temperature near the airflow inlet of the laundry accommodating apparatus 101 is within a stable change range, for example, the difference between the temperature near the airflow outlet (or a temperature in the laundry accommodating apparatus 101) and the temperature near the airflow inlet is within a temperature range of 18-30 °C. The detection of the temperature near the airflow outlet may be set to detection of one or more temperature spots in a temperature field near the airflow outlet; the detection of the temperature in the laundry accommodating apparatus 101 may be set to detection of one or more temperature spots in a temperature field in the laundry accommodating apparatus 101; and the detection of the temperature near the airflow inlet may be set to detection of one or more temperature spots in a temperature field near the airflow inlet.

The cooling stage is configured to cool the laundry in the laundry accommodating apparatus 101 to ensure that the dried laundry has a good hand feel.

In the drying operation, abnormal, or inaccurate control on the drying apparatus occurs easily, which negatively affects the drying process and reduces the drying effect.

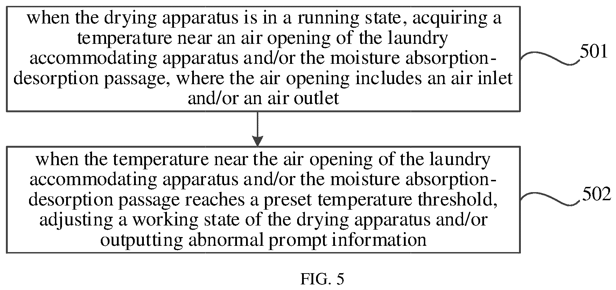

Therefore, the present application provides a method for controlling the above laundry treating device. As shown in FIG. 5, the method includes:
step 501, when the drying apparatus is in a running state, acquiring a temperature near an air opening of at least one of the laundry accommodating apparatus and the moisture absorption-desorption passage, wherein the air opening includes an air inlet and/or an air outlet; and
step 502, when the temperature near the air opening of at least one of the laundry accommodating apparatus and the moisture absorption-desorption passage reaches a preset temperature threshold, adjusting a working state of the drying apparatus and/or outputting abnormal prompt information.

In this embodiment, when the drying apparatus is in the running state, that is, in the drying operation process, the temperature near the air opening of at least one of the laundry accommodating apparatus and the moisture absorption-desorption passage is acquired, and according to the temperature near the air opening of at least one of the laundry accommodating apparatus and the moisture absorption-desorption passage, the working state of the drying apparatus is adjusted and/or the abnormal prompt information is output.

Specifically, the air opening includes an air inlet and/or an air outlet, and thus according to at least one of an air inlet and/or an air outlet of the laundry accommodating apparatus and an air inlet and/or an air outlet of the moisture absorption-desorption passage, the working state of the drying apparatus is adjusted and/or the abnormal prompt information is output.

In an embodiment, when at least one of the air inlet and the air outlet of the laundry accommodating apparatus reaches the preset temperature threshold, the working state of the drying apparatus is adjusted and/or the abnormal prompt information is output. In another embodiment, when at least one of the air inlet and the air outlet of the moisture absorption-desorption passage reaches the preset temperature threshold, the working state of the drying apparatus is adjusted and/or the abnormal prompt information is output. In still another embodiment, when at least one of the air inlet and the air outlet of the laundry accommodating apparatus reaches one preset temperature threshold and at least one of the air inlet and the air outlet of the moisture absorption-desorption passage reaches the other preset temperature threshold, the working state of the drying apparatus is adjusted and/or the abnormal prompt information is output.

According to the embodiments of the present disclosure, when drying the laundry, the laundry treating device can achieve abnormal detection according to the temperature near the air opening of at least one of the laundry accommodating apparatus and the moisture absorption-desorption passage, and thus punctually and accurately discover the drying abnormal and adjust the working state of the drying apparatus to achieve accurate control on a drying process and ultimately improve the drying effect.

In an embodiment of the present disclosure, the moisture absorption-desorption passage includes a moisture-absorbing passage and a regenerating passage; the drying apparatus includes the moisture absorption-desorption rotary wheel, the heating module and the heat exchange module; the moisture absorption-desorption rotary wheel is partially located on the moisture-absorbing passage and partially located on the regenerating passage; the heating module and the heat exchange module are located on the regenerating passage; the moisture absorption-desorption rotary wheel is configured to absorb moisture in circulating airflow in the moisture-absorbing passage; the heating module is configured to heat the moisture absorption-desorption rotary wheel in the regenerating passage to desorb the moisture from the moisture absorption-desorption rotary wheel, and the heat exchange module is configured to exchange heat with dehumidification airflow formed by moisture desorption, and includes a condensing module, an air-cooling module and the like.

When the temperature near the air opening of the moisture absorption-desorption passage reaches the preset temperature threshold, adjusting the working state of the drying apparatus and outputting the abnormal prompt information specifically include(s):
when a temperature near an air opening of the heat exchange module reaches the preset temperature threshold, adjusting the working state of the drying apparatus and/or outputting the abnormal prompt information.

In this embodiment, the heat exchange module is configured to exchange heat with the dehumidification airflow formed by moisture desorption. It has found experimentally that the temperature near at least one of an air inlet and an air outlet of the heat exchange module characterizes the working state and the drying abnormal of the drying apparatus more accurately. Therefore, whether the temperature near the air opening of the heat exchange module reaches the preset temperature threshold is determined and then the adjustment of the working state of the drying apparatus and/or output of the abnormal prompt information are/is determined according to a determination result, so that the drying abnormal can be punctually and accurately detected and the working state of the drying apparatus is adjusted, thereby achieving accurate control on the drying process.

In an embodiment of the present application, the heat exchange module includes a condensing module; and when the temperature near the air opening of the heat exchange module reaches the preset temperature threshold, adjusting the working state of drying apparatus and/or outputting the abnormal prompt information specifically include(s): when a condensing air inlet temperature near a condensing air inlet of the condensing module reaches the preset temperature threshold, adjusting the working state of the drying apparatus and/or outputting the abnormal prompt information.

In this embodiment, the heat exchange module includes the condensing module; and the condensing module is provided with a condensing air outlet and the condensing air inlet, and airflow flowing out of the regenerating passage enters the condensing module through the condensing air inlet, is condensed by the condensing module, flows out through the condensing air outlet and enters a heating module through a regenerating fan to dry the dehumidification airflow.

The condensing air inlet temperature near the condensing air inlet of the condensing module is acquired, and when the condensing air inlet temperature reaches the preset temperature threshold, which indicates that drying abnormal occurs and/or a dryness determination condition is satisfied, the working state of the drying apparatus is adjusted and/or the abnormal prompt information is output, thereby improving the drying effect of the laundry.

In an embodiment of the present application, the preset temperature threshold includes a first temperature threshold; and when the condensing air inlet temperature near the condensing air inlet of the condensing module reaches the preset temperature threshold, adjusting the working state of the drying apparatus specifically includes: when the condensing air inlet temperature reaches the first temperature threshold, reducing heating power of the heating module within a first duration.

In this embodiment, the preset temperature threshold includes the first temperature threshold; and when the condensing air inlet temperature rises to be greater than or equal to the first temperature threshold, which indicates that the condensing air inlet temperature is relatively high and at this time abnormal may have occurred, the heating power of the heating module is reduced for the first duration, so that the abnormal is eliminated, and the heating power of the heating module restores after the first duration.

In an embodiment, when the condensing air inlet temperature rises to be greater than or equal to the first temperature threshold, the heating power of the heating module is reduced to 0 W for 5 min and is then restored, thereby eliminating abnormal.

In an embodiment of the present application, when the condensing air inlet temperature reaches the first temperature threshold, the heating module is turned off and at least one of the condensing module and the regenerating fan of the drying apparatus is kept running, wherein the regenerating fan of the drying apparatus is arranged in the regenerating passage and configured to generate regenerating airflow of the regenerating passage.

In this embodiment, when the condensing air inlet temperature is greater than or equal to the first temperature threshold, the heating module is turned off and meanwhile at least one of the condensing module and the regenerating fan of the drying apparatus is still kept running. Thus, the running of the condensing module and/or the regenerating fan enables rapid cooling of the laundry treating device, thereby preventing the laundry treating device from becoming overheated.

In an embodiment, the first temperature threshold included in the preset temperature threshold is used to determine presence or absence of a water film on a filter structure of the laundry treating device, and the heating module is turned off and at least one of the condensing module and the regenerating fan of the drying apparatus is kept running for a first duration to break and remove the water film.

In this embodiment, the filter structure for filtering debris and clothes waddings is arranged in an air outlet duct of the laundry treating device, and when the water film exists on the filter structure, which renders the condensing air inlet temperature greater than or equal to the first temperature threshold, so the water film is broken and removed by turning off the heating module and keeping the condensing module and/or the regenerating fan running for the first duration, thereby eliminating the impact of the water film of the filter structure on the drying operation.

The first temperature threshold is set in the range of 70 °C to 120 °C, preferably 80°C to 100°C. For example, when the condensing air inlet temperature rises to be greater than or equal to 80 °C, it indicates that the condensing air inlet temperature is relatively high. At this time, the situation that the filter structure has a water film may occur, and thus the heating power of the heating module is reduced to 0 W and meanwhile at least one of the condensing module and the regenerating fan is kept running for 5 min, thereby achieving the purpose of breaking the water film.

Embodiments of the present application propose a method for detecting water film abnormal of the filter structure and solving this abnormal, so that the reliability of the drying operation is ensured.

It should be noted that after the above method for detecting water film abnormal of the filter structure and solving the abnormal is performed for a predicted number of times (such as three times), if the condensing air inlet temperature is still greater than or equal to the first temperature threshold, this abnormal is ignored and the drying apparatus continuous to run to further determine whether other abnormal exists. If the heating module is turned off for the predicted number of times, the condensing air inlet temperature is still above the first temperature threshold, it indicates that this situation is caused by other abnormal other than the water film abnormal, the drying apparatus continuous to run and according to the subsequent temperature, whether it is other abnormal and the dryness determination condition is satisfied is determined.

In an embodiment of the present application, the preset temperature threshold includes a second temperature threshold that is greater than the first temperature threshold; and when the condensing air inlet temperature near the condensing air inlet of the condensing module reaches the preset temperature threshold, adjusting the working state of the drying apparatus specifically includes: when the condensing air inlet temperature reaches the second temperature threshold, controlling the laundry treating device to enter a forced cooling mode which includes at least one of turning off the heating module and controlling the condensing module and the regenerating fan of the drying apparatus to be activated for a second duration.

In this embodiment, the preset temperature threshold further includes the second temperature threshold, and the second temperature threshold is greater than the first temperature threshold and is set to be in the range of 70°C to 120°C, preferably 100°C to 120°C.

When the condensing air inlet temperature is greater than or equal to the second temperature threshold, it indicates that the condensing air inlet temperature is relatively high. At this time, abnormal that the moisture absorption-desorption rotary wheel does not rotate may have occurred, and in order to ensure the safety of the drying apparatus, forced cooling is performed to eliminate the abnormal. The forced cooling mode includes turning off the heating module, and/or controlling the condensing module and the regenerating fan to be activated for a second duration, for example to be activated for 3 min.

In this way, forced cooling is performed after it is determined that the abnormal occurs to cool the laundry treating device, and the entire laundry treating device is stopped after being cooled for a period of time, so that the device is prevented from being overheated.

In an embodiment of the present application, when the condensing air inlet temperature near the condensing air inlet of the condensing module reaches the preset temperature threshold, outputting the abnormal prompt information specifically includes: when the condensing air inlet temperature reaches the second temperature threshold, outputting the abnormal prompt information that the rotary wheel is abnormal.

In this embodiment, when the condensing air inlet temperature is greater than or equal to the second temperature threshold, it is determined that the rotary wheel does not rotate, and the abnormal prompt information that the rotary wheel is abnormal is output so as to prompt a user to maintain. The method of outputting the abnormal prompt information includes but is not limited to: emitting sounds, emitting light, displaying a text, etc.

In an embodiment of the present application, the preset temperature threshold includes a first preset change amplitude threshold; and when the condensing air inlet temperature near the condensing air inlet of the condensing module reaches the preset temperature threshold, adjusting the working state of the drying apparatus specifically includes: when a change amplitude of the condensing air inlet temperature within a first preset time period is less than or equal to the first preset change amplitude threshold, turning off the heating module.

In this embodiment, when a temperature change amplitude of the condensing air inlet temperature within a fixed time is abnormal, that is, the change amplitude of the condensing air inlet temperature within the first preset time period is less than or equal to the first preset change amplitude threshold, it indicates that drying abnormal occurs, for example, the situation that the heating apparatus is abnormal occurs, and at this time, the heating module is turned off and the drying is stopped.

Exemplarily, if the rise amplitude of the condensing air inlet temperature within 10 minutes is less than 5 °C, it is determined that the heating module is abnormal, and then the heating module is turned off to achieve accurate control on the drying process.

In an embodiment of the present application, when the condensing air inlet temperature near the condensing air inlet of the condensing module reaches the preset temperature threshold, outputting the abnormal prompt information specifically includes: when the change amplitude of the condensing air inlet temperature within the first preset time period is less than or equal to the first preset change amplitude threshold, outputting the abnormal prompt information that the heating apparatus is abnormal.

In this embodiment, when the change amplitude of the condensing air inlet temperature within the first preset time period is less than or equal to the first preset change amplitude threshold, it indicates that the situation that the heating apparatus is abnormal occurs, the abnormal prompt information that the heating apparatus is abnormal is output while the heating module is turned off so as to prompt the user to maintain.

In an embodiment of the present application, the laundry treating device further includes an air inlet duct and an air outlet duct; the laundry accommodating apparatus is provided with an air inlet communicated with the moisture absorption-desorption passage through the air inlet duct, and an air outlet communicated with the moisture absorption-desorption passage through the air outlet duct;
the preset temperature threshold includes a third temperature threshold and a fourth temperature threshold, the third temperature threshold being less than the fourth temperature threshold; and
when the temperature near the air opening of the laundry accommodating apparatus reaches the preset temperature threshold, adjusting the working state of drying apparatus specifically includes:
when an air inlet temperature near the air inlet of the laundry accommodating apparatus reaches the third temperature threshold, increasing heating power of the heating module of the drying apparatus to first target power; and when the air inlet temperature near the air inlet of the laundry accommodating apparatus reaches the fourth temperature threshold, reducing the heating power of the heating module of the drying apparatus to second target power, so that an air outlet temperature near the air outlet of the laundry accommodating apparatus is within a target temperature range.

In this embodiment, a dynamic heating method in the drying operation is provided. Specifically, in the drying operation, when the air inlet temperature near the air inlet of the laundry accommodating apparatus is less than or equal to the third temperature threshold, the heating power of the heating module is increased; and when the air inlet temperature near the air inlet of the laundry accommodating apparatus is greater than or equal to the fourth temperature threshold, the heating power of the heating module is reduced, so that the heating power of the heating module is controlled to vary within a preset heating power range. Thus, the air outlet temperature near the air outlet of the laundry accommodating apparatus is within the target temperature range.

The third temperature threshold is the preset minimum temperature near the air inlet of the laundry accommodating apparatus, the fourth temperature threshold is the preset maximum temperature near the air inlet of the laundry accommodating apparatus, the preset minimum temperature may be set to 60 °C-75 °C, the preset maximum temperature may be set to 76 °C-85 °C, and the target temperature range may be set to 50 ± 3 °C. For example, in an embodiment, when the air inlet temperature of the laundry accommodating apparatus is less than or equal to 75 °C, the heating power of the heating module is increased; and when the air inlet temperature of the laundry accommodating apparatus is greater than or equal to 80 °C, the heating power of the heating module is reduced.

In an embodiment, the heating power of the heating module fluctuates in a preset heating power range of 600 W to 1400 W, so that the air outlet temperature of the laundry accommodating apparatus is in the range of 50 ± 3°C. For example, when the air inlet temperature of the laundry accommodating apparatus is less than or equal to 75 °C, the heating power of the heating module is controlled to be 1400 W; and when the air inlet temperature of the laundry accommodating apparatus is greater than or equal to 80 °C, the heating power of the heating module is controlled to be 600 W. In the embodiments of the present disclosure, the heating module may run at the power ranging from 600 W to 1400 W in the form of a sine wave, a square wave, a sawtooth wave, etc.

By means of the above control method, the air outlet temperature near the air outlet of the laundry accommodating apparatus may be kept constant as far as possible.

In addition, the moisture absorption-desorption rotary wheel located in the regenerating passage has relatively high regenerating efficiency. Specifically, when the heating module works at high heating power (such as 1400 W), the temperature of the moisture absorption-desorption rotary wheel located in the regenerating passage and the temperature of the dehumidification airflow may be increased, and the moisture absorption-desorption rotary wheel located in the regenerating passage has relatively high regenerating efficiency. When the heating module works at low heating power (such as 600 W), the temperature of the moisture absorption-desorption rotary wheel located in the regenerating passage and the temperature of the dehumidification airflow may be reduced, and meanwhile the regenerating efficiency of the moisture absorption-desorption rotary wheel located in the regenerating passage is reduced to a certain extent.

That is, the heating power of the heating module fluctuates between the high heating power and the low heating power, which can not only maintain the temperature in the laundry accommodating apparatus or the temperature near the air outlet of the laundry accommodating apparatus in the whole drying operation, but also balance the regenerating efficiency of the moisture absorption-desorption rotary wheel.

In an embodiment of the present application, adjusting the working state of the drying apparatus includes turning off the heating module of the drying apparatus, that is, acquiring the temperature near the air opening of at least one of the laundry accommodating apparatus and the condensing module; and when the temperature near the air opening reaches the preset temperature threshold, turning off the heating module of the drying apparatus.

In this embodiment, the turning-off of the heating module of the drying apparatus may be controlled according to the temperature near the air opening of at least one of the laundry accommodating apparatus and the condensing module, i.e., the heating and drying stage is ended. Specifically, when the temperature near the air opening of at least one of the laundry accommodating apparatus and the condensing module reaches the preset temperature threshold, the heating module is turned off to achieve accurate control on the drying proses, thereby improving the drying effect.

In an embodiment of the present application, the preset temperature threshold includes a fifth temperature threshold, a sixth temperature threshold, a seventh temperature threshold and a second preset change amplitude threshold, wherein the seventh temperature threshold is greater than the first temperature threshold and less than the second temperature threshold; and
when the temperature near the air opening reaches the preset temperature threshold, turning off the heating module of the drying apparatus specifically includes:
when a condensing air outlet temperature near a condensing air outlet of the condensing module reaches the sixth temperature threshold, turning off the heating module of the drying apparatus; or
when a condensing air inlet temperature of the condensing module reaches the seventh temperature threshold, turning off the heating module of the drying apparatus; or
when a change amplitude of an air outlet temperature of the laundry accommodating apparatus within a second preset time period is greater than or equal to the second preset change amplitude threshold, turning off the heating module of the heating apparatus.

In this embodiment, three approaches are provided for determining the end of the heating and drying stage, and the heating module may be turned off when any of the three approaches of determining dryness is satisfied. The three approaches are as follows.

Approach (1), the condensing air outlet temperature near the condensing air outlet of the condensing module is acquired, and when the condensing air outlet temperature is greater than or equal to the sixth temperature threshold, the heating and drying stage is completed, the heating module is turned off and the laundry treating device enters the cooling stage. The sixth temperature threshold may be a normal temperature near the condensing air outlet in the drying operation, ranges from 75 °C to 80 °C, and may generally be set to 80 °C.

Approach (2), the condensing air inlet temperature near the condensing air inlet of the condensing module is acquired, and when the condensing air inlet temperature is greater than or equal to the seventh temperature threshold, the heating and drying stage is completed, the heating module is turned off and the laundry treating device enters the cooling stage. The seventh temperature threshold may be a normal temperature near the condensing air inlet in the drying operation, ranges from 85 °C to 90 °C, and may generally be set to 90 °C.

It should be noted that the determination logic of the ways (1) and (2) is executed only after heating is performed until the air outlet temperature near the air outlet of the laundry accommodating apparatus reaches 45 °C or more, and if the dryness determination starts before the temperature reaches 45 °C, it will cause the detection of some information about drying abnormal to be affected. For example, when the condensing air inlet temperature is greater than or equal to 100 °C, the abnormal information that it is determined that the moisture absorption-desorption rotary wheel does not rotate cannot be detected.

Approach (3), the air outlet temperature near the air outlet of the laundry accommodating apparatus is acquired, and when the change amplitude of the air outlet temperature within the second preset time period is greater than or equal to the second preset change amplitude threshold, it is determined that the heating and drying stage is completed, the laundry treating device enters the cooling stage and the heating module is turned off. For example, the change amplitude of the air outlet temperature of the laundry accommodating apparatus within 10 minutes is determined and if the change amplitude is greater than 4°C, it is determined that drying is completed and the heating module is turned off.

In this embodiment, ways for determining whether the heating and drying stage is completed are provided, whether the heating and drying stage is completed can be determined more punctually and accurately, and the heating module can be turned off punctually when the heating and drying stage is completed. Thus, this, on the one hand, avoids the situation that the laundry is not dried but the heating module has been stopped, and on the other hand, can avoid excessive heating and drying, which results in irreversible damage to the laundry.

In an embodiment of the present application, the method further includes: after turning off the heating module, keeping the moisture absorption-desorption rotary wheel, the condensing module, a circulating fan of the drying apparatus and a regenerating fan of the drying apparatus running, wherein the circulating fan of the drying apparatus is arranged in the moisture-absorbing passage and configured to generate circulating airflow of the laundry accommodating apparatus and the moisture-absorbing passage.

In an embodiment, after the heating module is turned off, the laundry treating device enters the cooling stage of the drying operation, and the moisture absorption-desorption rotary wheel, the condensing module, the circulating fan and the regenerating fan of the drying apparatus are kept running. That is, upon completion of the heating and drying stage, the heating module stops working, but the moisture absorption-desorption driving part does not stop working and drives continuously the moisture absorption-desorption rotary wheel to run for a third duration. The third duration may be set by oneself, or according to the specific conditions of the different drying operations, or the moisture absorption-desorption driving part is stopped after the cooling stage is completed.

In this embodiment, when the heating and drying stage is completed, the heating module stops working and the laundry treating device may enter the cooling stage of the drying operation quickly. The moisture absorption-desorption driving part does not stop working and may drive the moisture absorption-desorption rotary wheel to rotate continuously to quickly dissipate waste heat of the heating module and drive the high-temperature airflow to quickly cool, thereby shortening the time of the cooling stage.

In this embodiment, when the heating and drying stage is completed, the circulating fan for generating circulating airflow passing through space between the laundry accommodating apparatus and the moisture-absorbing passage of the drying apparatus continues to operate, and thus can achieve airflow circulation between the laundry accommodating apparatus and the drying apparatus, thereby increasing the cooling speed of the laundry in the laundry accommodating apparatus. In another aspect, the regenerating fan for generating regenerating airflow passing through the regenerating passage continues to operate and thus can deliver dry regenerating airflow to the regenerating passage and take away and discharge the high-temperature moist airflow generated by the regenerating passage, thereby increasing the cooling speed of the laundry in the laundry accommodating apparatus.

In another embodiment, when the heating and drying stage is completed, the regenerating fan may continue to operate at higher power, and thus can deliver more dry regenerating airflow to the regenerating passage and take away and discharge the high-temperature moist airflow generated by the regenerating passage, thereby increasing the cooling speed of the laundry in the laundry accommodating apparatus.

In an embodiment of the present application, the method further includes: when an air inlet temperature of the laundry accommodating apparatus reaches an eighth temperature threshold, deactivating the moisture absorption-desorption rotary wheel, the condensing module, the circulating fan of the drying apparatus and the regenerating fan of the drying apparatus.

In this embodiment, in the cooling stage, when the air inlet temperature near the air inlet of the laundry accommodating apparatus is less than or equal to the eighth temperature threshold, it is determined that the cooling stage is completed. At this time, the drying operation has been completed, no other operation exists, and the entire laundry treating device may be stopped. The eighth temperature threshold is set between 50 °C and 55 °C. For example, when the air inlet temperature near the air inlet of the laundry accommodating apparatus is less than or equal to 55 °C, it is determined that the cooling stage is completed, and the moisture absorption-desorption rotary wheel, the condensing module, the circulating fan and the regenerating fan of the drying apparatus are deactivated.

In an embodiment of the present application, before adjusting the working state of the drying apparatus, the method further includes: when an air outlet temperature of the laundry accommodating apparatus reaches the fifth temperature threshold, controlling the laundry accommodating apparatus to rotate to perform a first weighing process to acquire a first weight value; and generating a drying time according to the first weight value.

In this embodiment, because the moisture content of the pre-weighed laundry is unknown and it is also possible that the drying time is inaccurate because it takes certain time to eliminate the abnormal (for example, break and remove the water film of the filter structure), the drying time is calibrated. Specifically, when heating is performed until the air outlet temperature of the laundry accommodating apparatus is greater than or equal to the fifth temperature threshold, the laundry is weighed to calibrate the drying time, and the calibrated drying time is displayed on a display interface of the laundry treating device.

In this way, an appropriate drying time is acquired to improve the accuracy of the drying operation.

It should be noted that in an embodiment, whether to perform the first weighing process can be determined according to a preset drying mode. The preset drying mode may be modes in which the drying time is not set by default, including an automatic mode under a drying-only operation, and in the automatic mode, the first weighing process is performed, so that the drying time is calibrated according to the first weight value acquired.

For modes in which the drying time is set by default, such as a washing-drying mode or a fixed-time drying mode in a drying-only operation, and the step of calibrating the drying time can be eliminated considering that the drying time has already been set.

In an embodiment of the present application, the method further includes: when the drying apparatus is in the running state, acquiring a rotating speed of a fan of the drying apparatus; and when the rotating speed is less than or equal to a preset rotating speed threshold, controlling the drying apparatus to stop running, wherein the fan of the drying apparatus includes at least one of a circulating fan and a regenerating fan.

In this embodiment, when the drying apparatus is in the running state, the rotating speed of the fan of the drying apparatus is detected, and the fan includes a circulating fan arranged in the moisture-absorbing passage and/or a regenerating fan arranged in the regenerating passage.

When the rotating speed of the fan is less than or equal to the preset rotating speed threshold, it indicates that the fan has a fault, and at this time, the drying apparatus is controlled to stop running. For example, when the rotating speed of the circulating fan is less than or equal to 1000 rpm or the rotating speed of the regenerating fan is less than or equal to 1000 rpm, the drying apparatus is controlled to stop running.

In this way, the abnormal detection and abnormal control of the fan of the drying apparatus are achieved, so that the reliability of the drying operation is improved.

In an embodiment of the present application, the method further includes: when the rotating speed is less than or equal to the preset rotating speed threshold, outputting the abnormal prompt information that the fan is abnormal.

In this embodiment, when the rotating speed of the fan is less than or equal to the preset rotating speed threshold, it indicates that the fan has a fault, and at this time, the abnormal prompt information that the fan is abnormal is output to remind the user that the drying operation cannot be carried out normally. For example, fan fault prompt information may be displayed on the display interface of the laundry treating device, and meanwhile a buzzer emits buzzing sounds so as to achieve the purpose of reminding the user punctually.

In an embodiment of the present application, before the drying apparatus runs, the method further includes: determining whether to perform a second weighing process according to a preset drying mode, and if the second weighing process is performed, controlling the laundry accommodating apparatus to rotate to acquire a second weight value; and when the second weight value is greater than or equal to a preset weight threshold, controlling the laundry accommodating apparatus to rotate for dehydration.

The running process of the laundry treating device includes a dehydration stage and the dehydration stage includes at least first dehydration after the rinsing stage in the laundry washing operation. In an embodiment, second dehydration may be performed before the heating and drying stage in the drying operation.

Specifically, after the first dehydration and drainage, second weighing process is performed to acquire the second weight value of the laundry in the laundry accommodating apparatus and whether the second weight value is greater than or equal to the preset weight threshold is determined. If the weight value is less than or equal to the preset weight threshold, second dehydration is not performed, and the laundry treating device enters the heating and drying stage; and if the second weight value is greater than or equal to the preset weight threshold, second dehydration is performed, and the laundry treating device enters the heating and drying stage after dehydration and laundry loosening by shaking. In this way, on the premise of ensuring the laundry treatment effect, the laundry treatment time can be shortened, and energy may be saved to a certain extent.

In addition, in an embodiment, whether second dehydration is performed may be determined according to the preset drying mode. The preset drying mode may be modes in which the drying time is not set by default, including an automatic mode under a drying-only operation, and in the automatic mode, the second weighing process is performed, so that whether second dehydration is performed is determined according to the second weight value acquired.

For modes in which the drying time is set by default, such as a washing-drying mode or a fixed-time drying mode in a drying-only operation, there is no need to perform second weighing process considering that the drying time has already been set.

In an embodiment of the present application, before second dehydration, the heating module is not turned on, that is, the process of dehydration by heating is eliminated compared with the drying operation in the related art to avoid interference with subsequent abnormal detection.

In an embodiment of the present application, the laundry treating device further includes a temperature measuring sensor configured to acquire a temperature of the laundry accommodating apparatus and/or a temperature near an air opening of the moisture absorption-desorption passage.

In this embodiment, the laundry treating device further includes the temperature measuring sensor configured to detect and acquire the temperature near the air opening of the laundry accommodating apparatus and/or the temperature near the air opening of the moisture absorption-desorption passage. The temperature measuring sensor includes a temperature sensor, a temperature and humidity sensor and the like.

By accurately detecting the temperature near the air opening of the laundry accommodating apparatus and/or the temperature near the air opening of the moisture absorption-desorption passage, abnormal of the drying operation can be accurately determined and the drying apparatus can be accurately controlled.

In an embodiment of the present application, the method further includes: acquiring correspondence data between a resistance value and a detected temperature value of the temperature measuring sensor; and comparing the correspondence data with standard resistance-temperature correspondence data of the temperature measuring sensor, and if the correspondence data does not match the standard resistance-temperature correspondence data, outputting the prompt information that the temperature measuring sensor is abnormal.

In this embodiment, a method for determining abnormal of the temperature measuring sensor is provided. Specifically, actual correspondence data between the resistance value and the detected temperature value of the temperature measuring sensor is acquired, the actual correspondence data is compared with a pre-stored standard resistance-temperature correspondence data of the temperature measuring sensor, and if the actual correspondence data does not match the standard resistance-temperature correspondence data, it indicates that the temperature measuring sensor is abnormal and at this time, the prompt information that the temperature measuring sensor is abnormal is output to remind the user of replacing the temperature measuring sensor.

In this way, the following situation is avoided: the use of the abnormal temperature measuring sensor for temperature measurement leads to the inaccuracy of determination of subsequent drying abnormal and control over the drying apparatus, so that the reliability of the drying operation is improved.

In an embodiment of the present application, the temperature measuring sensor includes a first sensor, a second sensor, a third sensor, and a fourth sensor, wherein the first sensor is arranged near a condensing air inlet of a condensing module of the drying apparatus and is configured to acquire a condensing air inlet temperature of the condensing module; the second sensor is arranged near a condensing air outlet of the condensing module of the drying apparatus and is configured to acquire a condensing air outlet temperature of the condensing module; the third sensor is arranged at any of a position near a tub bottom of an outer tub of the laundry treating device and a position near an airflow outlet of the laundry accommodating apparatus and is configured to acquire an air outlet temperature of the laundry accommodating apparatus; and the fourth sensor is arranged near an air inlet duct of the laundry treating device and is configured to acquire an air inlet temperature of the laundry accommodating apparatus.

In this embodiment, as shown in FIG. 3, the temperature measuring sensor includes a first sensor 107, and the first sensor 107 is arranged near the condensing air inlet of the condensing module of the drying apparatus and configured to acquire the condensing air inlet temperature of the condensing module, so that according to the condensing air inlet temperature, the drying abnormal is determined and the working state of the drying apparatus is controlled.

Specifically, when the condensing air inlet temperature is greater than or equal to the first temperature threshold (for example 80 °C), it is determined that a filter structure of the laundry treating device has a water film, and at this time, the heating module is turned off and at least one of the condensing module and the regenerating fan is kept running for a first duration to break and remove the water film.

When the condensing air inlet temperature is greater than or equal to the seventh temperature threshold (such as 90 °C), it is determined that the condition that the heating and drying stage is ended is satisfied, and the heating module is turned off.

When the condensing air inlet temperature is greater than or equal to the second temperature threshold (such as 100 °C), it is determined that abnormal that the moisture absorption-desorption rotary wheel does not rotate exists, and at this time, the heating module is turned off and/or the condensing module and the regenerating fan are controlled to be activated for the second duration and the abnormal prompt information that the rotary wheel is abnormal is output.

When the change amplitude of the condensing air inlet temperature within the first preset time period is less than or equal to the first preset change amplitude threshold, it is determined that the situation that the heating apparatus is abnormal exists, and at this time, the heating module is turned off for stopping drying, and the abnormal prompt information that the heating apparatus is abnormal is output.

The temperature measuring sensor further includes the second sensor, and the second sensor is arranged near the condensing air outlet of the condensing module of the drying apparatus and configured to acquire the condensing air outlet temperature of the condensing module, so that according to the condensing air outlet temperature, the working state of the drying apparatus is controlled. Specifically, when the condensing air outlet temperature is greater than or equal to the sixth temperature threshold (such as 80 °C), it is determined that the condition that the heating and drying stage is ended is satisfied, and the heating module is turned off.

As shown by an example in FIG. 2, the temperature measuring sensor further includes a third sensor arranged in a target set region 108, the target set region 108 includes any of a position near the tub bottom of the outer tub of the laundry treating advice and a position near the airflow outlet of the laundry accommodating apparatus, and the third sensor is configured to acquire the air outlet temperature of the laundry accommodating apparatus, so that the working state of the drying apparatus is controlled according to the air outlet temperature of the laundry accommodating apparatus.

Specifically, when the air outlet temperature of the laundry accommodating apparatus is greater than or equal to the fifth temperature threshold (such as 45 °C), the laundry accommodating apparatus is controlled to rotate to perform the first weighing process and the drying time is calibrated according to the first weight value acquired.

When the change amplitude of the air outlet temperature of the laundry accommodating apparatus within the second preset time period is greater than or equal to the second preset change amplitude threshold, it is determined that the condition that the heating and drying stage is ended, is satisfied and the heating module is turned off.

As shown in FIG. 3, the temperature measuring sensor further includes a fourth sensor 109, and the fourth sensor 109 is arranged near the air inlet duct of the laundry treating device and configured to acquire the air inlet temperature of the laundry accommodating apparatus, so that according to the air inlet temperature of the laundry accommodating apparatus, the working state of the drying apparatus is acquired. Specifically, when the air inlet temperature of the laundry accommodating apparatus is less than or equal to the third temperature threshold (such as 75 °C), the heating power of the heating module is increased; and when the air inlet temperature near the air inlet of the laundry accommodating apparatus is greater than or equal to the fourth temperature threshold (such as 80 °C), the heating power of the heating module is reduced, so that the air outlet temperature of the laundry accommodating apparatus is within the target temperature range.

In an embodiment of the present application, in the heating and drying stage, condensing water and cooling water are discharged intermittently after drying, and in the heating and drying stage, the condensing water is intermittently supplied. In another embodiment, in the heating and drying stage, the condensing water is supplied continuously to ensure the condensing efficiency and shorten the drying time.

Embodiments of the present application provide a laundry treating device. The laundry treating device includes a laundry accommodating apparatus, a moisture absorption-desorption passage, a drying apparatus, a memory and a processor. The moisture absorption-desorption passage is communicated with the laundry accommodating apparatus, the drying apparatus is arranged in the moisture absorption-desorption passage and includes at least one of a moisture absorption-desorption rotary wheel, a heating module and a heat exchange module; the memory stores programs or instructions; and the processor is connected to the memory and implements various steps of the method embodiment for controlling the laundry treating device described above when executing the programs or instructions and can achieve the same technical effect, which is not repeated here for avoiding repetition.

The memory may be configured to store software programs and various data. The memory may mainly include a first storage area for storing programs or instructions and a second storage area for storing data. The first storage area may store an operating system, and applications or instructions required by at least one function (such as a sound playback function and an image playback function). In addition, the memory may include a volatile memory or a non-volatile memory. Alternatively, the memory may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) or a direct rambus RAM (DRRAM). The memory in the embodiment of the present application includes but is not limited to these and any other appropriate type of memories.

The processor may include one or more processing units. Alternatively, the processor integrates an application processor and a modulation and demodulation processor. The application processor mainly processes operations involving an operating system, a user interface, and an application, while the modulation and demodulation processor mainly processes wireless communication signals and is, for example, a baseband processor. It may be understood that the above modulation and demodulation processor may not be integrated into the processor.

Embodiments of the present disclosure further provide a readable storage medium storing programs or instructions stored thereon. The programs or instructions, when executed by a processor, implement various processes of the method embodiment for controlling the laundry treating device described above and can achieve the same technical effect, which is not repeated here for repetition.

Embodiments of the present disclosure further provide a chip. The chip includes a processor and a communication interface coupled to the processor. The processor is configured to run programs or instructions to implement various processes of the method embodiment for controlling the laundry treating device described above and achieve the same technical effect, which is not repeated here for repetition.

It should be understood that the chip mentioned in the embodiments of the present application may also be referred to as a system-level chip, a system chip, a chip system, or a system-on-chip chip.

It should also be noted that in this context, the terms "include," "contains," or any other variants thereof are intended to cover the non-exclusive containing, such that the processes, methods, commodities or apparatus including a series of elements not only include those elements, but also include other unclearly listed elements, or also include the inherent elements of such processes, methods, commodities or apparatuses. Without more limitations, the element defined by the phrase "including a ..." does not exclude the existence of other same elements in a process, a method, a commodity, or an apparatus that including such an element. In addition, it should be noted that the scopes of the method and apparatus in the embodiments of the present application are not limited to performing functions in an order shown or discussed, and may also include performing functions in a substantially simultaneous manner or in an opposite order according to the functions involved. For example, the method described may be performed in a different order than that described, and various steps may be added, omitted, or combined. Additionally, the features described with reference to certain examples can be combined in other examples.

The embodiments of the present application have been described above in conjunction with the accompanying drawings, but the present application is not limited to the specific embodiments described above. The specific embodiments described above are only illustrative and not restrictive. Those of ordinary skill in the art can also make many forms within the scope of protection of the present application without departing from the spirit of and the protection scope of the claims of the present application.

## Claims

1. A method for controlling a laundry treating device, **characterized in that** the laundry treating device comprises a laundry accommodating apparatus, a moisture absorption-desorption passage, and a drying apparatus, wherein the moisture absorption-desorption passage is communicated with the laundry accommodating apparatus, and the drying apparatus is arranged in the moisture absorption-desorption passage and comprises at least one of a moisture absorption-desorption rotary wheel, a heating module and a heat exchange module, the method comprising:
when the drying apparatus is in a running state, acquiring a temperature near an air opening of the laundry accommodating apparatus and/or the moisture absorption-desorption passage, wherein the air opening comprises an air inlet and/or an air outlet; and
when the temperature near the air opening of the laundry accommodating apparatus and/or the moisture absorption-desorption passage reaches a preset temperature threshold, adjusting a working state of the drying apparatus and/or outputting abnormal prompt information.

2. The method according to claim 1, **characterized in that** the moisture absorption-desorption passage comprises a moisture-absorbing passage and a regenerating passage; the drying apparatus comprises at least two of the moisture absorption-desorption rotary wheel, the heating module and the heat exchange module; the moisture absorption-desorption rotary wheel is partially located in the moisture-absorbing passage and partially located in the regenerating passage; the heating module and/or the heat exchange module is located in the regenerating passage; the moisture absorption-desorption rotary wheel is configured to absorb moisture in circulating airflow in the moisture-absorbing passage; the heating module is configured to heat the moisture absorption-desorption rotary wheel in the regenerating passage to desorb moisture from the moisture absorption-desorption rotary wheel, and the heat exchange module is configured to exchange heat with dehumidification airflow formed through moisture desorption; and **characterized in that** when the temperature near the air opening of the moisture absorption-desorption passage reaches the preset temperature threshold, adjusting the working state of the drying apparatus and/or outputting the abnormal prompt information specifically comprises:
when a temperature near an air opening of the heat exchange module reaches the preset temperature threshold, adjusting the working state of the drying apparatus and/or outputting the abnormal prompt information.

3. The method according to claim 2, **characterized in that** the heat exchange module comprises a condensing module; and when the temperature near the air opening of the heat exchange module reaches the preset temperature threshold, adjusting the working state of the drying apparatus and/or outputting the abnormal prompt information specifically comprises:
when a condensing air inlet temperature near a condensing air inlet of the condensing module reaches the preset temperature threshold, adjusting the working state of the drying apparatus and/or outputting the abnormal prompt information.

4. The method according to claim 3, **characterized in that** the preset temperature threshold comprises a first temperature threshold; and when the condensing air inlet temperature near the condensing air inlet of the condensing module reaches the preset temperature threshold, adjusting the working state of the drying apparatus specifically comprises:
when the condensing air inlet temperature reaches the first temperature threshold, reducing heating power of the heating module within a first duration.

5. The method according to claim 4, **characterized in that** when the condensing air inlet temperature reaches the first temperature threshold, turning off the heating module while keeping the condensing module and/or a regenerating fan of the drying apparatus running, wherein the regenerating fan of the drying apparatus is arranged in the regenerating passage and configured to form regenerating airflow of the regenerating passage.

6. The method according to claim 4, **characterized in that** the first temperature threshold is used to determine presence of a water film in a filter structure of the laundry treating device, and the heating module is turned off while the condensing module and/or a regenerating fan of the drying apparatus is kept running for the first duration to break the water film.

7. The method according to claim 3, **characterized in that** the preset temperature threshold comprises a second temperature threshold, and the second temperature threshold is greater than a first temperature threshold; and when the condensing air inlet temperature near the condensing air inlet of the condensing module reaches the preset temperature threshold, adjusting the working state of the drying apparatus specifically comprises:
when the condensing air inlet temperature reaches the second temperature threshold, controlling the laundry treating device to enter a forced cooling mode, wherein the forced cooling mode comprises at least one of turning off the heating module, and controlling the condensing module and a regenerating fan of the drying apparatus to be activated for a second duration.

8. The method according to claim 7, **characterized in that** when the condensing air inlet temperature near the condensing air inlet of the condensing module reaches the preset temperature threshold, outputting the abnormal prompt information specifically comprises:
when the condensing air inlet temperature reaches the second temperature threshold, outputting the abnormal prompt information that the rotary wheel is abnormal.

9. The method according to claim 3, **characterized in that** the preset temperature threshold comprises a first preset change amplitude threshold; and when the condensing air inlet temperature near the condensing air inlet of the condensing module reaches the preset temperature threshold, adjusting the working state of the drying apparatus specifically comprises:
when a change amplitude of the condensing air inlet temperature within a first preset time period is less than or equal to the first preset change amplitude threshold, turning off the heating module.

10. The method according to claim 9, **characterized in that** when the condensing air inlet temperature near the condensing air inlet of the condensing module reaches the preset temperature threshold, outputting the abnormal prompt information specifically comprises:
when the change amplitude of the condensing air inlet temperature within the first preset time period is less than or equal to the first preset change amplitude threshold, outputting the abnormal prompt information that the heating apparatus is abnormal.

11. The method according to claim 1, **characterized in that** the laundry treating device further comprises an air inlet duct and an air outlet duct; the laundry accommodating apparatus is provided with an air inlet communicated with the moisture absorption-desorption passage through the air inlet duct, and an air outlet communicated with the moisture absorption-desorption passage through the air outlet duct;
the preset temperature threshold comprises a third temperature threshold and a fourth temperature threshold, and the third temperature threshold is less than the fourth temperature threshold; and
when the temperature near the air opening of the laundry accommodating apparatus reaches the preset temperature threshold, adjusting the working state of the drying apparatus specifically comprises:
when an air inlet temperature near the air inlet of the laundry accommodating apparatus reaches the third temperature threshold, increasing heating power of the heating module of the drying apparatus to first target power; and when the air inlet temperature near the air inlet of the laundry accommodating apparatus reaches the fourth temperature threshold, reducing the heating power of the heating module of the drying apparatus to second target power, thereby enabling an air outlet temperature near the air outlet of the laundry accommodating apparatus to be within a target temperature range.

12. The method according to claim 3, **characterized in that** adjusting the working state of the drying apparatus comprises turning off the heating module of the drying apparatus, that is, acquiring the temperature near the air opening of the laundry accommodating apparatus and/or the condensing module, and when the temperature near the air opening reaches the preset temperature threshold, turning off the heating module of the drying apparatus.

13. The method according to claim 12, **characterized in that** the preset temperature threshold comprises a fifth temperature threshold, a sixth temperature threshold, a seventh temperature threshold and a second preset change amplitude threshold, wherein the seventh temperature threshold is greater than the first temperature threshold and less than a second temperature threshold; and
when the temperature near the air opening reaches the preset temperature threshold, turning off the heating module of the drying apparatus specifically comprises:
when a condensing air outlet temperature near a condensing air outlet of the condensing module reaches the sixth temperature threshold, turning off the heating module of the drying apparatus; or
when a condensing air inlet temperature of the condensing module reaches the seventh temperature threshold, turning off the heating module of the drying apparatus; or
when a change amplitude of an air outlet temperature of the laundry accommodating apparatus within a second preset time period is greater than or equal to the second preset change amplitude threshold, turning off the heating module of the heating apparatus.

14. The method according to claim 13, **characterized by** further comprising:
after turning off the heating module, keeping the moisture absorption-desorption rotary wheel, the condensing module, a circulating fan of the drying apparatus and a regenerating fan of the drying apparatus running,
wherein the circulating fan of the drying apparatus is arranged in the moisture-absorbing passage and configured to form circulating airflow of the laundry accommodating apparatus and the moisture-absorbing passage.

15. The method according to claim 14, **characterized by** further comprising:
when an air inlet temperature of the laundry accommodating apparatus reaches an eighth temperature threshold, turning off the moisture absorption-desorption rotary wheel, the condensing module, the circulating fan of the drying apparatus and the regenerating fan of the drying apparatus.

16. The method according to any one of claims 1 to 15, **characterized in that** before adjusting the working state of the drying apparatus, the method further comprises:
when an air outlet temperature of the laundry accommodating apparatus reaches a fifth temperature threshold, performing, by controlling the laundry accommodating apparatus to rotate, a first weighing process to obtain a first weight value; and
generating a drying time according to the first weight value.

17. The method according to any one of claims 1 to 16, **characterized by** further comprising:
when the drying apparatus is in the running state, acquiring a rotating speed of a fan of the drying apparatus; and
when the rotating speed is less than or equal to a preset rotating speed threshold, controlling the drying apparatus to stop running, wherein the fan of the drying apparatus comprises at least one of a circulating fan and/or a regenerating fan.

18. The method according to claim 17, **characterized by** further comprising:
when the rotating speed is less than or equal to the preset rotating speed threshold, outputting abnormal prompt information that the fan is abnormal.

19. The method according to any one of claims 1 to 18, **characterized in that** before the drying apparatus runs, the method further comprises:
determining whether to perform a second weighing process according to a preset drying mode, and if the second weighing process is performed, acquiring a second weight value by controlling the laundry accommodating apparatus to rotate; and
when the second weight value is greater than or equal to a preset weight threshold, performing dehydration by controlling the laundry accommodating apparatus to rotate.

20. The method according to any one of claims 1 to 19, **characterized in that** the laundry treating device further comprises a temperature measuring sensor configured to acquire a temperature of the laundry accommodating apparatus and/or a temperature near an air opening of the moisture absorption-desorption passage.

21. The method according to claim 20, **characterized by** further comprising:
acquiring correspondence data between a resistance value and a detected temperature value of the temperature measuring sensor; and
comparing the correspondence data with standard resistance-temperature correspondence data of the temperature measuring sensor, and if the correspondence data does not match the standard resistance-temperature correspondence data, outputting prompt information that the temperature measuring sensor is abnormal.

22. The method according to claim 20, **characterized in that** the temperature measuring sensor comprises a first sensor, a second sensor, a third sensor, and a fourth sensor,
wherein the first sensor is arranged near a condensing air inlet of a condensing module of the drying apparatus, and is configured to acquire a condensing air inlet temperature of the condensing module; the second sensor is arranged near a condensing air outlet of the condensing module of the drying apparatus, and is configured to acquire a condensing air outlet temperature of the condensing module; the third sensor is arranged at any of a position near a tub bottom of an outer tub of the laundry treating device and a position near an airflow outlet of the laundry accommodating apparatus, and is configured to acquire an air outlet temperature of the laundry accommodating apparatus; and the fourth sensor is arranged near an air inlet duct of the laundry treating device, and is configured to acquire an air inlet temperature of the laundry accommodating apparatus.

23. A laundry treating device, **characterized by** comprising a laundry accommodating apparatus, a moisture absorption-desorption passage, a drying apparatus, a memory and a processor, wherein
the moisture absorption-desorption passage is communicated with the laundry accommodating apparatus, the drying apparatus is arranged in the moisture absorption-desorption passage and comprises at least one of a moisture absorption-desorption rotary wheel, a heating module and a heat exchange module;
the memory stores a program or an instruction; and
the processor is connected to the memory, and implements steps of the method for controlling the laundry treating device according to any one of claims 1 to 22 when executing the program or the instruction.

24. A readable storage medium, storing a program or an instruction, **characterized in that** the program or the instruction, when executed by a processor, implements steps of the method for controlling the laundry treating device according to any one of claims 1 to 22.
